# EUROPEAN PATENT SPECIFICATION

(11) **EP 1 183 764 B1**
(45) Date of publication and mention of the grant of the patent: **22.01.2003**
(21) Application number: 00926622.2
(22) Date of filing: 24.05.2000
(51) Int. Cl.: H02H 7/06

(54) **AN ELECTRICAL MACHINE WINDING GROUND-FAULT PROTECTION SYSTEM**
ERDFEHLER-SCHUTZEINRICHTUNG FÜR DIE WICKLUNG EINER ELEKTRISCHEN MASCHINE
SYSTEME DE PROTECTION CONTRE LES FUITES A LA TERRE D'UN BOBINAGE DE MACHINE ELECTRIQUE

(30) Priority: 24.05.1999 PL 33338099
(43) Date of publication of application: 06.03.2002
(73) Proprietor: ABB Schweiz AG, 5400 Baden (CH)
(72) Inventor: FULCZYK, Marek, PL-47-220 K dzierzyn-Ko le. (PL); BERTSCH, Joachim, CH-5405 Baden-Dättwi (CH)
(74) Representative: ABB Patent Attorneys
(86) International application number: CH0000292
(87) International publication number: WO00072422

(56) References cited:
- DE-A- 2 503 141
- DE-A- 4 329 381

## Description

The object of the invention is a ground fault protection system of a winding of an electrical machine with an earthed neutral point, especially for a generator stator winding, applicable during the operation of the machine connected in series with a transformer or connected in parallel with a generator, or directly connected to busbars.

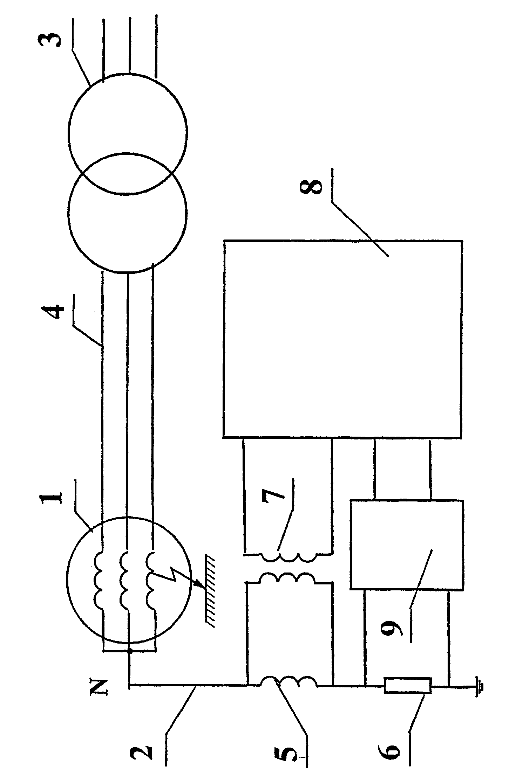

A known ground fault protection system of a generator stator winding presented in ABB Network Partner catalogue No. 1MDB 02012-EN issued in November 1995, page 3, fig. 4, incorporates two resistors, one of a lower resistance and the other having resistance approximately 4 times higher than the first one. These resistors are connected between the neutral point of the generator and earth, and they are connected in series with one another. A system containing a voltage source of frequency equal to ¼ of the generator rated frequency is connected in parallel to the lower-resistance resistor. This system is coupled with the ground-fault protection unit. A voltage transformer whose secondary winding is connected with the outputs of the ground-fault protection unit is connected to the resistor whose resistance is 4 times higher than that of the first resistor.

DE-A-4 329 381 shows a ground fault protection system with the same topology.

A disadvantage of the presented ground-fault protection system of a generator stator winding is that the value of the ground-fault current passing at the point of the ground-fault, in the case of a ground fault in any part of the generator stator winding, depends mainly upon the value of the resistance of the resistors connected between the neutral point of the stator winding and earth. With the value of resistance of these resistors which is used in such protection systems, these resistors always cause an increase in the value of the ground-fault so that the value of this current always largely exceeds 5 A. If a ground fault occurs in the generator stator winding, this current causes a considerable damage to the stator winding. Another disadvantage of the presented generator stator winding ground-fault protection system is that a significant value of the ground-fault current, both at the place of the ground fault in the generator stator and in the generator neutral point, which depends on the value of the resistance of the resistors connected between the generator neutral point and earth, restricts the length of the area protected by this ground-fault protection system.

The essence of the ground-fault protection system for the winding of an electrical machine, especially for a generator stator winding, according to the invention, where the ground-fault protection system incorporates an earthing branch connected in the neutral point of the winding, into which branch a low-resistance resistor is connected, which resistor is connected in parallel to a source of voltage of frequency equal to ¼ of the rated frequency of the machine, and the source of this voltage is coupled with a ground-fault protection unit whose outputs are connected with the secondary winding of a voltage transformer, and the primary winding of the voltage transformer is connected with the earthing branch, is that in the circuit formed by the primary winding of the voltage transformer and the earthing branch, between the neutral point of the winding and the low-resistance resistor, a shunt reactor is connected in parallel. The inductance of the shunt reactor is within 0.1 to 20 henries.

The object of the invention is explained as an example embodiment in the drawing which shows a unit diagram of a ground-fault protection system of a generator stator winding operating in a unit with a transformer connected in series.

A generator 1 incorporates an earthing branch 2 connected between the neutral point N and earth and it is connected with transformer 3 through busbars 4. In the earthing branch 2 there is installed a shunt reactor 5 connected in series with a resistor 6 of low resistance of several hundred ohms, connected with earth. The shunt reactor 5 is connected in parallel with the primary winding of a voltage transformer 7 whose secondary winding is connected in parallel with a ground-fault protection unit 8. The resistor 6 is connected in parallel with a voltage source of frequency equal to ¼ of the rated frequency of the generator 1, which is an injecting system 9 which is connected with the ground-fault protection unit 8.

The voltage injected by the injecting system 9 serves to bias the conductors of the machine with respect to ground, with a frequency that differs from the generator frequency. A ground fault causes a current that depends on the nature of the fault and on the injection voltage. The ground-fault protection unit 8 observes this current and the injected voltage, determines if a fault has occurred and what the nature of the fault is. If necessary, the ground-fault protection unit 8 operates a breaker for disconnecting the generator.

In a trouble-free operation condition of the generator 1 connected with the transformer 3 voltage between the neutral point N and earth equals zero. Ground-fault capacitance current and current passing through the elements connected between the neutral point N of the generator 1 and earth also equal zero. Inductance of the shunt reactor 5 earthing the neutral point N of the generator 1 stator is selected to limit the current passing through the main insulation of the winding of the generator 1 stator during ground fault to less than 5 A, and also not to cause passage of ground-fault current exceeding 5 A at the neutral point N. The value of this inductance is within the range from 0.1 to 20 henries. By an adequate selection of the inductance of the shunt reactor 5 a proper operation of the ground-fault protection unit 8 is ensured for faults along the whole length of the generator 1 rotor winding, which reduces, and even totally eliminates damage to the magnetic circuit of the generator 1 stator.

The invention can be applied to protecting not only a generator, but also to another type of electrical machine with a winding that has a neutral point, such as a motor or a transformer.

## Claims

1. A ground-fault protection system of a winding of an electrical machine (1), incorporating an earthing branch connected to the neutral point (N) of the winding, into which branch a low-resistance resistor (6) is connected, which resistor (6) is connected in parallel to a voltage source (9)of frequency equal to ¼ of the rated frequency of the machine (1), and the source (9)of this voltage is coupled with a ground-fault protection unit (8) whose outputs are connected with the secondary winding of a voltage transformer (7), and the primary winding of the voltage transformer (7) is connected with the earthing branch, **characterised in that** in the circuit formed by the primary winding of the voltage transformer (7) and the earthing branch (2), between the neutral point (N) of the winding of the machine (1) and the low-resistance resistor (6) a shunt reactor (5) is connected in parallel.

2. A ground-fault protection system of a winding of an electrical machine (1) according to claim 1 **characterised in that** the inductance of the shunt reactor (5) is within the range from 0.1 to 20 henries.

3. A ground-fault protection system of a winding of an electrical machine (1) according to claim 1 **characterised in that** the electrical machine (1) is a generator, a motor or a transformer.

## Patentansprüche

1. Erdfehlerschutzsystem einer Wicklung einer elektrischen Maschine (1), in die ein mit dem Neutralpunkt (N) der Wicklung verbundener Erdungszweig integriert ist, an dem ein niederohmiger Widerstand (6) angeschlossen ist, der parallel zu einer Spannungsquelle (9) mit einer Frequenz gleich 1/4 der Nennfrequenz der Maschine (1) angeschlossen ist und wobei die Quelle (9) dieser Spannung mit einer Erdfehlerschutzeinheit (8) gekoppelt ist, deren Ausgänge an die Sekundärwicklung eines Spannungstransformators (7) angeschlossen sind und die Primärwicklung des Spannungstransformators (7) an den Erdungszweig angeschlossen ist, **dadurch gekennzeichnet, daß** in dem durch die Primärwicklung des Spannungstransformators (7) und den Erdungszweig (2) gebildeten Stromkreis zwischen dem Neutralpunkt (N) der Wicklung der Maschine (1) und dem niederohmigen Widerstand (6) eine Nebenschlußdrossel (5) parallel geschaltet ist.

2. Erdfehlerschutzsystem einer Wicklung einer elektrischen Maschine (1) nach Anspruch 1, **dadurch gekennzeichnet, daß** die Induktanz der Nebenschlußdrossel (5) im Bereich von 0,1 bis 20 Henry liegt.

3. Erdfehlerschutzsystem einer Wicklung einer elektrischen Maschine (1) nach Anspruch 1, **dadurch gekennzeichnet, daß** die elektrische Maschine ein Generator, ein Motor oder ein Transformator ist.

## Revendications

1. Système de protection contre les courts-circuits à la masse d'un enroulement d'une machine électrique (1), comprenant une branche de mise à la terre branchée au point neutre (N) de l'enroulement, dans laquelle branche un élément résistif de faible résistance (6) est branché, lequel élément résistif (6) est branché en parallèle avec une source de tension (9) dont la fréquence est égale au 1/4 de la fréquence nominale de la machine (1) et la source (9) de cette tension est raccordée à une unité de protection contre les courts-circuits à la masse (8) dont les sorties sont reliées à l'enroulement secondaire d'un transformateur de tension (7) et l'enroulement primaire du transformateur de tension (7) est relié avec la branche de mise à la terre, **caractérisé en ce qu'**une réactance shunt (5) est branchée en parallèle dans le circuit formé par l'enroulement primaire du transformateur de tension (7) et la branche de mise à la terre (2), entre le point neutre (N) de l'enroulement de la machine (1) et l'élément résistif de faible résistance (6).

2. Système de protection contre les courts-circuits à la masse d'un enroulement d'une machine électrique (1) selon la revendication 1, **caractérisé en ce que** l'inductance de la réactance shunt (5) est comprise entre 0,1 et 20 henrys.

3. Système de protection contre les courts-circuits à la masse d'un enroulement d'une machine électrique (1) selon la revendication 1, **caractérisé en ce que** la machine électrique est un générateur, un moteur ou un transformateur.
